# EUROPEAN PATENT APPLICATION

(11) **EP 4 783 452 A1**
(43) Date of publication of application: **29.07.2026**
(21) Application number: 25153603.3
(22) Date of filing: 23.01.2025
(51) Int. Cl.: H02P 27/08

(54) **SELECTION AND CONFIGURATION METHOD AND APPARATUS FOR A DRIVE DEVICE FOR A ROTATIONAL ELECTRIC MACHINE**

(71) Applicant: ABB SCHWEIZ AG, 5400 Baden (CH)
(72) Inventor: JACIMOVIC, Jacim, 5430 Wettingen (CH); FRITSCHY, Jonas, 5200 Brugg (CH)
(74) Representative: Zimmermann & Partner Patentanwälte mbB

(57) **Abstract**

A method for selecting and/or configuring a drive device for a rotational electric machine, particularly upgrading and/or modernizing an existing drive device, includes obtaining (101) characteristic data of the rotational electric machine, the characteristic data including one or more of a type code, a service history, a field of application, a motor parameter; determining (102) a parametrization for the rotational electric machine based on the characteristic data, the parametrization including one or more of a rated speed, a maximum speed, a rated torque, a maximum torque, a continuous use indicator; and selecting and/or configuring (110) the drive device based on the parametrization.

## Description

### TECHNICAL FIELD

Embodiments of the present disclosure generally relate to a method or an apparatus for selecting and/or configuring a drive device for a rotational electric machine, and a corresponding computer program product.

### BACKGROUND

Drive devices, such as a medium voltage, MV, drives used in connection with a rotational electric machine (i.e., a rotating electric machine), have evolved technically over the last years. Conventionally, selecting (i.e., dimensioning) or configuring a drive device, including e.g. replacing a drive device for modernization, is a manual task that may take more than e.g. 10 hours per drive device and is prone to human errors.

There is a need for facilitating the selecting and/or configuring procedure.

### SUMMARY

According to an aspect, a method for selecting and/or configuring a drive device is provided. The drive device relates to a rotational electric machine, e.g. an existing rotational electric machine. The method includes obtaining characteristic data of the rotational electric machine, determining a parametrization for the rotational electric machine based on the characteristic data, and selecting and/or configuring the drive device based on the parametrization. The characteristic data include one or more of a type code of the rotational electrical machine, a change history of the rotational electrical machine, a field of application of the rotational electrical machine, and a motor parameter of the rotational electrical machine. The parametrization includes one or more of a rated speed of the rotational electrical machine, a maximum speed of the rotational electrical machine, a rated torque of the rotational electrical machine, a maximum torque of the rotational electrical machine, and a continuous use indicator of the rotational electrical machine.

The drive device is typically already existing, i.e. a drive device to be modernized and/or upgraded. In this connection, the drive device is typically intended to be used with an existing rotational electrical machine, e.g. connected or connectible to the existing rotational electrical machine.

The type code, as used herein, is e.g. a code (e.g., a number) that is used to identify the type of the rotational electric machine. The code may include, without limitation, an indication of one or more selected from the group consisting of: rated power, supply voltage, rated current, number of phases, field of application, physical dimensions, asynchronous/synchronous machine configuration, number of poles, number of slots.

The service history, as used herein, is e.g. a collection of historic data indicating when and/or how often a service operation, e.g. maintenance and/or repair, has taken place. For example, the service history may indicate that a drive has undergone more service operations than expected or at higher intervals, or vice versa.

The field of application, as used herein, may include an indication as to in which environments and/or in which technical area the rotational electric machine is used. For example, and without limitation, the field of application can be in marine industry, such as ships, in metal industry, such as metal power plants, in power industry, in cement industry, in mining industry, such as mines, in printers. The field of application may influence, as a non-limiting example, the selection of an appropriate control software, an energy optimization, a number of semiconductors etc.

The parametrization, as used herein, may include one or more of the following: Motor specifications including, without limitation, one or more of a speed, a power, a pole number, a nominal voltage, a supply frequency, a type of a motor cable, a motor space heater, a location of a power cable; a cooling system configuration including, without limitation, a number of fans, a power of fans, a cooling liquid mixture, a pump flow, a cooling liquid temperature, a maximum cabinet temperature, a water pressure, a raw water quality (such as, e.g., aggressive water or sea water), a number of sensors; a control hardware and software configuration including, without limitation, a number of control boards, a control supply voltage (e.g. one-phase 120 Volt AC ±10%, one-phase 230 Volt AC ±10%, one-phase 220 Volt DC ±10%); power electronics hardware including, without limitation, a number of semiconductors, a type of semiconductors (e.g. 6-pulse, 12-pulse, 18-pulse, 24-pulse), a number of capacitors, a type of a DC link capacitor, an indication as to whether insulation resistance measurements have been performed (e.g., not performed, performed only for the power part, performed only for the control part, performed for both the power part and the control part).

In embodiments, the method is a method, as described herein, for automatically selecting and/or automatically configuring the drive device.

In embodiments, the drive device is an existing drive device as described above, and configuring the drive device includes upgrading and/or modernizing the drive device.

Upgrading the drive device, as used herein, may include a software upgrade, e.g. of the control software, in the drive device, but is not limited thereto. Modernizing the drive device, as used herein, may include a hardware upgrade or a replacement of the drive device, but is not limited thereto.

In embodiments, an existing drive configuration of an existing drive device connected to the rotational electric machine is determined; an available drive configuration is obtained, e.g. from a drive configuration database; the existing drive configuration is compared with the available drive configuration, and an information on hardware parts of the existing drive device to be replaced is obtained such that it meets the available drive configuration; and the configuring of the drive device is performed on the existing drive device that has the replaced hardware parts. For example, the configuration is performed after the hardware parts have been replaced according to the obtained information.

In embodiments, selecting and/or configuring the drive device includes inputting, into a mathematical model, the characteristic data, the parametrization, the existing drive configuration, and the available drive configuration. The mathematical model may include, for example, summing, or combining, multiple sub-strings.

In embodiments, a cost for selecting and/or configuring the drive device is determined, and the cost is input into the mathematical model.

In embodiments, the available drive configuration is obtained from the drive configuration database, and the method further includes updating the drive configuration database with a drive configuration that is obtained by the configuring procedure of the drive device, as described herein.

In embodiments, the method further includes a classification of the drive configurations into different categories. The categories include at least one of an age of the existing drive device and a number of rotational electric machine driven by the drive device.

In embodiments, machine learning is performed. An example of the machine learning includes: Storing, in a database as an initial synthetic database, each configuration labelling a difference between existing drives and modernization opportunities (e.g., modernization packages) and applications; training a model to generate a new configuration based on the initial synthetic database; for a next case, generating a first modernization configuration using software rules; inspecting quality control by comparing a deviation on a new part list vs. an old part list, and evaluating whether a modernized drive device provides an output required by the rotating electric machine in a specific application. In an example, if the configuration thus obtained matches the application, the configuration is stored in the database and labelled as working. In an example, if the configuration thus obtained does not match the application, the configuration is labelled as not-working. In an example, a deviation of a configuration labelled as not-working is identified and stored. In an example, a deviation of a configuration labelled as not-working is adjusted in difference, and the synthetic database is updated. In an example, the model is retrained periodically.

According to another aspect, an apparatus for automatically selecting and/or automatically configuring a drive device is provided. The apparatus is configured to perform the method as described herein.

According to yet another aspect, a computer program product is provided. The computer program product includes instructions that, when they are executed on a computer, make the computer perform the method as described herein. In an example, the computer program product includes a computer program including the instructions.

### BRIEF DESCRIPTION OF THE DRAWINGS

Embodiments of the technology described in the present disclosure are described with reference to the accompanying drawings in which:
Fig. 1 shows a flowchart illustrating a method according to an exemplary embodiment;
Fig. 2 shows a flowchart illustrating a method according to an exemplary embodiment;
Figs. 3a through 3d each show a part of a flowchart illustrating a method according to an exemplary embodiment;
Fig. 4 shows a schematic block diagram illustrating an apparatus for selecting and/or configuring a drive device for a rotational electric machine, according to an exemplary embodiment; and
Fig. 5 shows a computer program product.

### DETAILED DESCRIPTION

Conventionally, selecting and/or configuring a drive device for a rotational electric machine is a time-consuming manual task and prone to errors. For example, for any given rotational electric machine, a drive device suitable for the machine is selected, i.e. a drive device having a proper or suitable dimensioning. Alternatively or additionally, for the respective machine, the drive device is configured.

According to embodiments as shown herein, an upgrade package and/or a modernization package for a drive device, such as a medium voltage, MV, drive, is automatically selected (e.g., selected according to suitable dimensions, i.e. dimensioned) and/or configured. The drive device may include a converter.

A medium voltage, as used herein, may relate to a voltage of 40 kilovolts (kV) or less, 35 kV or less, particularly 30 kV or less. The medium voltage may be a voltage of 0.5 kV or more, for example 1 kV or more.

In embodiments, the method described herein is performed automatically or autonomously. For example, the method serves to dimension and/or configure control hardware of the drive device, e.g. control hardware of the existing drive device to be modernized.

In an example of the method relating to a modernization of an existing drive, expressed in a general way, the drive device is analyzed (category A), the application requirements are analyzed, the design options for modernization are evaluated (category 2), and the service history of the drive is considered (category 3). According to the example, based on these four data sets, the method will, in an automated and autonomous manner, provide as an output a list of parts for modernizing the drive device.

A design option, as used herein, may be regarded as one or more of a hardware change or a hardware variant that may affect the upgrade and/or modernization. In an example, a design option includes a hardware change, e.g. of a product evolution from the launch of the product until a last product unit was employed or sold. In another example, a design option includes a hardware variant of the product at a certain release version, e.g. to fulfill a certain requirement, such as a customer requirement.

An example of a design option includes a hardware design generation, such as a first generation of hardware, a second generation of hardware etc. A specific example of a design option related to a discharging unit includes a discharging unit concept, e.g. a discharging switch type IGCT or a discharging switch type high voltage relay. A specific example of a design option related to a heat exchanger, such as a roof air-to-air heat exchanger, includes different manufacturers of the heat exchanger, such as a manufacturer 1 or a manufacturer 2. A specific example of a design option related to the mechanical design of the product includes standard requirements or application-specific requirements, such as marine-specific requirements (e.g., extended vibration requirements). A specific example of a design option related to a swing frame of a control unit (a control swing frame) includes the width of the swing frame, such as 600 mm or 1000 mm. As the width is the result of the amount of hardware that was build into the (control) swing frame at the initial drive delivery, this width can be regarded a design option as well.

In embodiments, characteristic data of a rotational electric machine for which a drive device is selected and/or configured are obtained. For example, the characteristic data are obtained automatically, e.g. by automatically analyzing and/or understanding a configuration of an existing drive device for that machine that is due for modernization. The configuration may include a configuration of control hardware in the drive device.

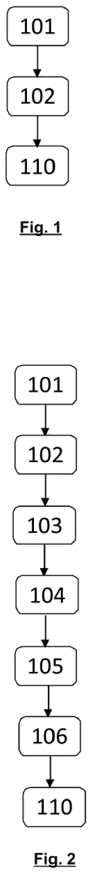

Fig. 1 shows a flowchart illustrating a method according to an exemplary embodiment. In 101 of Fig. 1, characteristic data of the rotational electric machine are obtained. The characteristic data include one or more of a type code, a service history, a field of application, a motor parameter. In 102 of Fig. 1, a parametrization for the rotational electric machine based on the characteristic data. The parametrization includes one or more of a rated speed, a maximum speed, a rated torque, a maximum torque, a continuous use indicator. In 110 of Fig. 1, the drive device is selected and/or configured based on the parametrization.

Fig. 2 shows a flowchart illustrating a method according to an exemplary embodiment. Elements that are the same or similar to the flowchart in Fig. 1 are omitted for convenience. In between 102 and 110, 103 through 106 are performed. In 103, an existing drive configuration of an existing drive device connected to the rotational electric machine is determined. In 104, an available drive configuration is obtained, e.g. from a database (not shown). In 105, the existing drive configuration is compared with the available drive configuration to obtain an information on hardware parts of the existing drive device to be replaced to meet the available drive configuration. In 106, the configuring of the drive device is performed on the existing drive device having the replaced hardware parts.

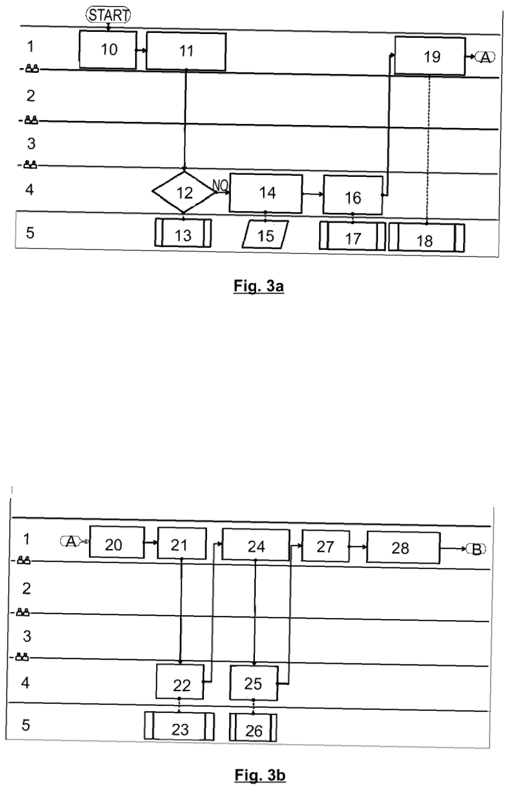

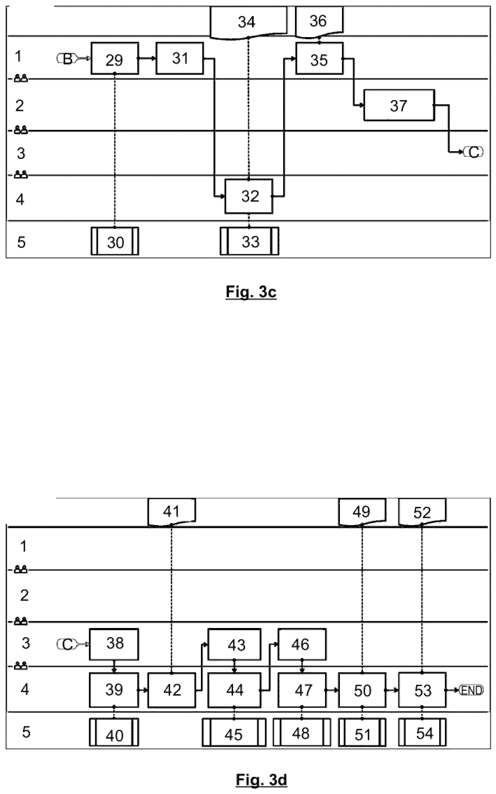

Figs. 3a through 3d each show a part of a flowchart illustrating a method according to an exemplary embodiment. The flow in starts in Fig. 3a ("START") and ends in Fig. 3d ("END"). Connections between the partial flow charts are indicated via letters, i.e. letter A in Fig. 3a is connected to letter A in Fig. 3b; letter B in Fig. 3b is connected to letter B in Fig. 3c; and letter C in Fig. 3c is connected to letter C in Fig. 3d. In each of Figs. 3a through 3d, 1 indicates local human interaction ("level 1"), e.g. by a local sales department; 2 indicates a human service interaction ("level 2"), e.g. by a service sales department; 3 indicates a human engineering interaction ("level 3"), e.g. by a service engineering department; 4 indicates tool/software steps ("level 4"); and 5 indicates support steps ("level 5"), e.g. supporting processing and documentation.

In Fig. 3a, after the flow is started, on level 1 in 10, details (e.g., maintenance need, spare part need, options) are gathered. In 11, a drive serial number is selected. On level 4 in 12, it is determined whether the drive is on a blacklist, via accessing, in 13, a drive blacklist. If the drive is not on the blacklist, in 14, data is read from an installed base tool, such as drive data and service history data, by accessing, in 15, a database. In 16, modules of the lineup are derived by analyzing a type code, by accessing, in 17, a type code rule set. In 19 on level 1, it is determined whether there are any restrictions (such as country restrictions, end-user restrictions, usage restrictions) by accessing, in 18, a respective list.

In Fig. 3b, on level 1 in 20, the correctness of the installed base data is confirmed. In 21, a common type code option is selected, e.g. from a (graphical) user interface. In 22 on level 4, a common type code with options is defined by performing a type code mapping in 23. In 24 on level 1, upgrade design options are selected, e.g. from a (graphical) user interface, such as a price and/or a relevant scope. In 25 on level 4, the upgrade design options are saved via an upgrade option definition in 26. In 27 on level 1, PM kits to be quoted are selected and confirmed. In 28, a service agreement (e.g., type and duration) to be quoted is selected.

In Fig. 3c, on level 1 in 29, spare parts per lineup module are selected by accessing, in 30, a spare part kit definition. In 31 on level 1, the configuration is confirmed and saved. In 34, an external entity performs a technical offer, a commercial offer, and a cost breakdown, by utilizing a cost and price calculation on level 4 in 32, which, in turn, accesses a cost/price breakdown definition in 33. In 36, an external entity performs an offer. In 35 on level 1, the offer is sent for the configuration to level 2. In 37, on level 2, a configuration status is changed to "ordered", and operations are handed over.

In Fig. 3d, on level 3 in 38, a common type code option is selected from a (graphical) user interface. On level 4 in 39, the "common type code" with options is defined by accessing a spare part kit definition in 40. In 41, an external entity uploads a common type code. In 42 on level 4, the common type code is sent. In 43 on level 3, upgrade design options are selected from a (graphical) user interface. In 44 on level 4, a mapping per lineup module is performed by accessing an upgrade option in 45. In 46 on level 3, CAD relevant options are selected from a (graphical) user interface. In 47 on level 4, CAD parameters are defined by accessing, in 48, CAD parameter definition. In 49, an external entity inputs an SAP config file. In 50 on level 4, the SAP config file is created and saved in a definition of the SAP config file in 51. In 52, an external entity inputs a CAD config file. In 53 on level 4, the CAD config file is created and saved in a definition of the CAD config file in 54.

Via the process shown in Figs. 3a through 3d, an algorithm is developed to automate the categories 1 through 3 mentioned above. The algorithm compares a configuration in use and application requirements with a database of available configurations of control upgrade and selects an appropriate configuration for control upgrade.

Subsequently, a synthetic database is trained. The synthetic database is made e.g. of at least 20 configurations for at least 5 different applications, but this is merely a non-limiting example. The synthetic database includes a mathematical model that predicts the configurations for modernization based on the running design, application's requirements, and available options for modernization. It may detect a pattern for configuring and pricing a modernization.

For example, the training of the synthetic database includes an offline learning. In an example, the generation of synthetic data in stems from a preparation of multiple configurations for multiple fields of application, e.g., without limitation, at least 20 configurations for at least 5 fields of application, such as marine, metal, power, cement, mining. Data points, e.g. configurations, may be classified into multiple categories, for example three categories. The categories may include a manufacturing age of a drive, a field of application, and an amount of drive motors per drive lineup. The mathematical model may be trained according to the input data classification thus obtained and the condition thus obtained. The method may include comparing the new application's requirements and existing drive configurations with the predicted and human-verified propose configuration on one side.

The most suited parts, e.g. hardware parts, for the specific application may be determined automatically. Subsequently, the synthetic database may be expanded with new data upon each new configuration. The database thus expanded may be used to online train the mathematical model such that future predictions are improved.

In an example, the offline learning may be complemented by online learning in which the offline system is used as a start. Then, new input data from the original drive configuration, application expectations, and new design options are used. Then, the configuration for the modernization is predicted. Then, a quality of prediction is checked. Then, if any deviation is recorded, the offline database is extended with a relationship between 3 points defined in the offline learning method. Then, the mathematical model is re-trained using the extended database. Then, after e.g. more than 100 configurations, the mathematical model will become more accurate in predicting the complete package of hardware components.

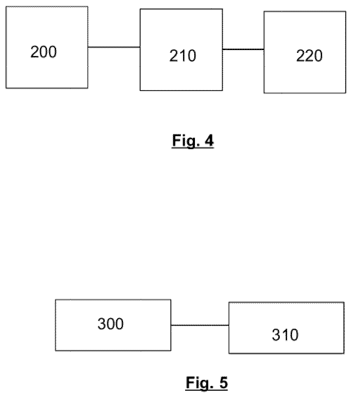

Fig. 4 shows a schematic block diagram illustrating an apparatus 200 for selecting and/or configuring a drive device 210 for a rotational electric machine 220, according to an exemplary embodiment. The apparatus 200 is configured to implement a method as described herein for selecting and/or configuring the drive device 210 for the rotational electric machine 220.

Fig. 5 shows a computer program product 300 including instructions, which, when executed on a computer 310, make the computer 310 perform a method as described herein for selecting and/or configuring the drive device 210 for the rotational electric machine 220.

## Claims

1. A method for selecting and/or configuring a drive device (210) for a rotational electric machine (220), the method including:
- obtaining (101) characteristic data of the rotational electric machine, the characteristic data including one or more of a type code, a service history, a field of application, a motor parameter;
- determining (102) a parametrization for the rotational electric machine based on the characteristic data, the parametrization including one or more of a rated speed, a maximum speed, a rated torque, a maximum torque, a continuous use indicator;
- selecting and/or configuring (110) the drive device based on the parametrization.

2. The method of claim 1, wherein the drive device (210) is an existing drive device (210) connected or connectible to the rotational electric machine, and wherein configuring the drive device (210) includes upgrading and/or modernizing the drive device (210).

3. The method of claim 1 or 2, further including:
- determining (103) an existing drive configuration of an existing drive device connected to the rotational electric machine;
- obtaining (104) an available drive configuration [from a database];
- comparing (105) the existing drive configuration with the available drive configuration to obtain an information on hardware parts and software features of the existing drive device to be replaced to meet the available drive configuration;
- performing (106) the configuring of the drive device on the existing drive device having the replaced hardware parts.

4. The method of claim 3, wherein the selecting and/or configuring the drive device includes inputting, into a mathematical model, the characteristic data, the parametrization, the existing drive configuration, and the available drive configuration.

5. The method of claim 4, further including:
- determining a cost for the selecting and/or configuring of the drive device; and
- inputting the cost into the mathematical model.

6. The method of any one of claims 3 to 5, wherein the available drive configuration is obtained from a drive configuration database.

7. The method of claim 6, further including updating the drive configuration database with a drive configuration obtained through the configuring of the drive device.

8. The method of any one of the preceding claims, further including preparing drive configurations for multiple fields of application.

9. The method of claim 8, wherein the fields of application include at least two of a marine industry use, a metal industry use, a power industry use, a cement industry use, and a mining industry use.

10. The method of claim 9, further including a classification of the drive configurations into different categories, the categories including at least one of an age of the existing drive device and a number of rotational electric machines driven by the drive device.

11. The method of claim 10, further including predicting, by the mathematical model, the drive configuration, determining a quality of the prediction, determining a prediction deviation based on the quality, and updating the mathematical model based on the prediction deviation.

12. The method of any one of the preceding claims, wherein one or more of the method steps are performed automatically.

13. An apparatus (200) for automatically selecting and/or automatically configuring a drive device (210) for a rotational electric machine (220), wherein the apparatus is configured to perform the method according to any one of the preceding claims.

14. The apparatus (200) according to claim 13, wherein the drive device (210) is an existing drive device (210) connected to the rotational electric machine.

15. A computer program product (300) including instructions, which, when executed on a computer (310), make the computer perform the method according to any one of claims 1 through 12.
